# EUROPEAN PATENT SPECIFICATION

(11) **EP 4 361 796 B1**
(45) Date of publication and mention of the grant of the patent: **24.06.2026**
(21) Application number: 22880388.8
(22) Date of filing: 13.10.2022
(51) Int. Cl.: G06F 8/41, G06F 8/30

(54) **LANGUAGE INTEROPERATION METHOD AND APPARATUS, STORAGE MEDIUM, AND PROGRAM PRODUCT**
SPRACHINTEROPERATIONSVERFAHREN UND -VORRICHTUNG, SPEICHERMEDIUM UND PROGRAMMPRODUKT
PROCÉDÉ ET APPAREIL D'INTEROPÉRABILITÉ DE LANGAGE, SUPPORT DE STOCKAGE ET PRODUIT-PROGRAMME

(30) Priority: 14.10.2021 CN 202111200966
(43) Date of publication of application: 01.05.2024
(73) Proprietor: Huawei Technologies Co., Ltd., Shenzhen, Guangdong 518129 (CN)
(72) Inventor: XUAN, Jiazhen, Shenzhen, Guangdong 518129 (CN); YUAN, Jian, Shenzhen, Guangdong 518129 (CN)
(74) Representative: Maiwald GmbH
(86) International application number: PCT/CN2022/125164
(87) International publication number: WO 2023/061452

(56) References cited:
- CN-A- 102 567 023
- CN-A- 106 415 495
- CN-A- 106 970 802
- CN-A- 109 871 284
- CN-A- 112 753 014
- US-A1- 2020 218 534
- BINGER CHEN ET AL: "RPT: Effective and Efficient Retrieval of Program Translations from Big Code", ARXIV.ORG, CORNELL UNIVERSITY LIBRARY, 201 OLIN LIBRARY CORNELL UNIVERSITY ITHACA, NY 14853, 23 March 2021 (2021-03-23), XP081915459

## Description

### TECHNICAL FIELD

This application relates to the computer programming field, and in particular, to a language interoperation method and apparatus, a storage medium, and a program product.

### BACKGROUND

With development of computer technologies, types of programming languages are also increasing continuously. As a development tool, a programming language is usually designed to meet a development requirement of a specific field or industry. For example, a Java language is mainly applied to an IT industry such as enterprise software development, Android mobile development, or big data cloud computing; and a Python language is usually used in the field of graphics processing, scientific computing, web programming, multimedia application and engine development, machine learning, artificial intelligence, or the like. In other words, the programming languages are applicable to different fields. Therefore, appropriate programming languages need to be adaptively selected for different development environments to meet development requirements.

When one programming language cannot meet a development requirement in a specific environment, or when another programming language has an advantage over the programming language in fulfilling a part of the development requirement in the specific environment, the programming language may be used in combination with the another programming language to jointly fulfill the development requirement. Therefore, a concept of language interoperability is proposed. Language interoperability means a capability of different programming languages to interoperate as a part of a same system. Although an existing language interoperation method can enable programming languages to have language interoperability, the method has obvious disadvantages: 1. Both development and maintenance costs are high. 2. It is difficult to further implement multi-language interoperation through expansion. 3. A plurality of steps are required when the programming languages are used to implement language interoperation, and operations are complex, hence undermining developer experience. The article by Binger Chen et al, ARXIV.ORG, Cornell University Library, 201 Olin Library Cornell University Ithaca, NY 14853, 23 March 2021 (2021-03-23), refers to "RPT: Effective and Efficient Retrieval of Program Translations from Big Code"

In view of this, how to reduce costs and operational difficulty in language interoperation implementation and improve scalability of language interoperability of programming languages while providing language interoperability for the programming languages becomes a hot research issue in this field.

### SUMMARY

In view of this, a language interoperation method and apparatus, a storage medium, and a program product are provided. According to a language interoperation method provided in an embodiment of this application, language interoperability is provided for the programming languages while reducing costs and operational difficulty in language interoperation implementation, and improving scalability of language interoperability of programming languages. The invention is set out in the appended set of claims.

According to a first aspect, an embodiment of this application provides a language interoperation method. The method includes: obtaining code in a first language and code in a plurality of second languages; generating a unified abstract representation of interoperation boundary information of the plurality of second languages based on the code in the plurality of second languages, where the unified abstract representation is binary code of the interoperation boundary information of the plurality of second languages, and the interoperation boundary information of the plurality of second languages represents constituent elements allowing mutual access or use with the first language among constituent elements of the plurality of second languages; and compiling the code in the first language based on the unified abstract representation, to obtain and output binary code of the code in the first language, where when the binary code of the code in the first language is executed, a constituent element in the code in the first language and a constituent element of any one of the plurality of second languages are mutually accessible or usable.

According to the language interoperation method in this embodiment of this application, the code in the plurality of second languages is obtained; the unified abstract representation of the interoperation boundary information of the plurality of second languages may be generated based on the code in the plurality of second languages, where the unified abstract representation is the binary code of the interoperation boundary information of the plurality of second languages, so that the unified abstract representation can reflect the constituent elements allowing mutual access or use with the first language among the constituent elements of the plurality of second languages; and the code in the first language may be compiled based on the unified abstract representation, so that the binary code of the code in the first language is obtained. When the binary code of the code in the first language is executed, the constituent element in the code in the first language and constituent elements in the code in the plurality of second languages are mutually accessible or usable, that is, the first language has interoperability with the plurality of second languages. The unified abstract representation may be obtained by using the interoperation boundary information of the plurality of second languages and does not relate to an internal method of a constituent element, and there is no need to parse all syntax of the plurality of second languages, so that the language interoperation method in this embodiment of this application has low development costs. An update of an internal method of a constituent element of the plurality of languages does not affect the interoperation boundary information of the plurality of second languages and therefore does not affect the unified abstract representation, and there is no need to maintain the unified abstract representation, so that the language interoperation method in this embodiment of this application has low maintenance costs. An increase of the second languages may cause an increase of constituent elements of the plurality of second languages, but does not affect original constituent elements and does not affect original content of the unified abstract representation, so that interoperability of the first language and the plurality of second languages can be further expanded. A developer only needs to complete compilation of the code in the first language and start the language interoperation method, so that workload of the developer is reduced and that operational difficulty of the language interoperation method is reduced. In conclusion, according to the language interoperation method in this embodiment of this application, language interoperability is provided for the programming languages while reducing costs and operational difficulty in language interoperation implementation, and improving scalability of language interoperability of programming languages.

According to the first aspect, in a first possible implementation of the language interoperation method, the generating a unified abstract representation of interoperation boundary information of the plurality of second languages based on the code in the plurality of second languages includes: recognizing the interoperation boundary information of the plurality of second languages based on the code in the plurality of second languages; and generating the unified abstract representation based on the interoperation boundary information of the plurality of second languages.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1 shows an example of interoperation implementation between Kotlin and Java languages in the prior art;
FIG. 2 shows an example of interoperation implementation between Kotlin and C languages in the prior art;
FIG. 3 is a schematic diagram of a GraalVM multi-language virtual machine architecture in the prior art;
FIG. 4 shows an example application scenario of a language interoperation method according to an embodiment of this application;
FIG. 5 is an example schematic diagram of a language interoperation method according to an embodiment of this application;
FIG. 6 shows an example of generation of a unified abstract representation of interoperation boundary information of a plurality of second languages according to an embodiment of this application;
FIG. 7 shows an example of a binary format of a unified abstract representation according to an embodiment of this application;
FIG. 8 shows an example of obtaining binary code of code in a first language and running the binary code of the code in the first language according to an embodiment of this application;
FIG. 9 is an example schematic diagram of a structure of a language interoperation apparatus according to an embodiment of this application; and
FIG. 10 is an example schematic diagram of a structure of a language interoperation apparatus according to an embodiment of this application.

### DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are shown in the accompanying drawing, the accompanying drawings are not necessarily drawn to scale unless otherwise specified.

The specific term "example" herein means "used as an example, embodiment, or illustration". Any embodiment described as an "example" is not necessarily explained as being superior to or better than other embodiments.

In addition, to better describe this application, plenty of specific details are given in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

The following explains terms that may appear in this specification.

Constituent element: It refers to an element that constitutes code in a programming language. The constituent element may include at least one type of content in code such as a class, an interface, a function, and a data format, for example, may include a plurality of types of data formats such as an integer type, a floating point number type, and a Boolean type, and/or a plurality of types of classes, a plurality of types of interfaces, and a plurality of types of functions.

Host language and target language: When interoperability is provided for language A, so that language A can interoperate with languages B, C, D, and the like, that is, when a class compiled in language A can directly communicate with a class compiled in language B, C, or D, language A is referred to as a host language, and languages B, C, D, and the like are referred to as target languages.

Generic erasure: During compilation, all generic information (actual types of parameters used by instances of generic constituent elements, that is, specific types of classes, interfaces, functions, data structures, or the like) is erased. Java generics is used as an example. For example, a generic type List<String> becomes a list after compilation, and a Java virtual machine cannot obtain the additional generic type information <String> but can obtain only the list.

Generic instantiation: Similar to a manner used by a C++ template, a process of generating an instance (such as a class instance) of a constituent element of a feature type of a template is referred to as instantiation.

Bytecode (Bytecode): It usually refers to intermediate code that has been compiled but is irrelevant to machine code (code that can be directly executed by a computer) in a current running environment and can be referred to as machine code only after being translated by an interpreter (or a virtual machine). The bytecode is usually generated by a compiler. A typical example is Java bytecode, where languages such as Java and Kotlin usually support compilation to obtain Java bytecode.

Garbage collection: It is an automatic memory management manner in which a garbage collector attempts to reclaim memory that has been allocated to a program but is no longer used. The memory no longer referenced is referred to as garbage.

Application binary interface (application binary interface, ABI): It indicates a set of rules that the compiler and a linker comply with, including invocation conventions and name-mangling (name-mangling). The invocation conventions specify how functions are translated to assembly code and invoked, and the name-mangling describes how to expose functions.

The following describes a language interoperation method provided in the prior art.

A principle of the language interoperation method proposed in the prior art is to design a specific interoperability mechanism between two specific programming languages, so that the two programming languages are interoperable with each other. The following uses interoperation implementation between Kotlin and Java languages and interoperation implementation between Kotlin and C languages as an example for description.

The Kotlin language is a static programming language used for modern multi-platform applications, including a plurality of backends responsible for compilation optimization and target code generation, such as a Java virtual machine (Java virtual machine, JVM) backend, a native backend, and a JavaScript backend. Different backends are in different running environments and have different capabilities. Therefore, the backends cannot communicate with each other. The Kotlin language at the JVM backend can interoperate with the Java language, and further, by using a Java native interface (Java native interface, JNI), can interoperate with the C language.

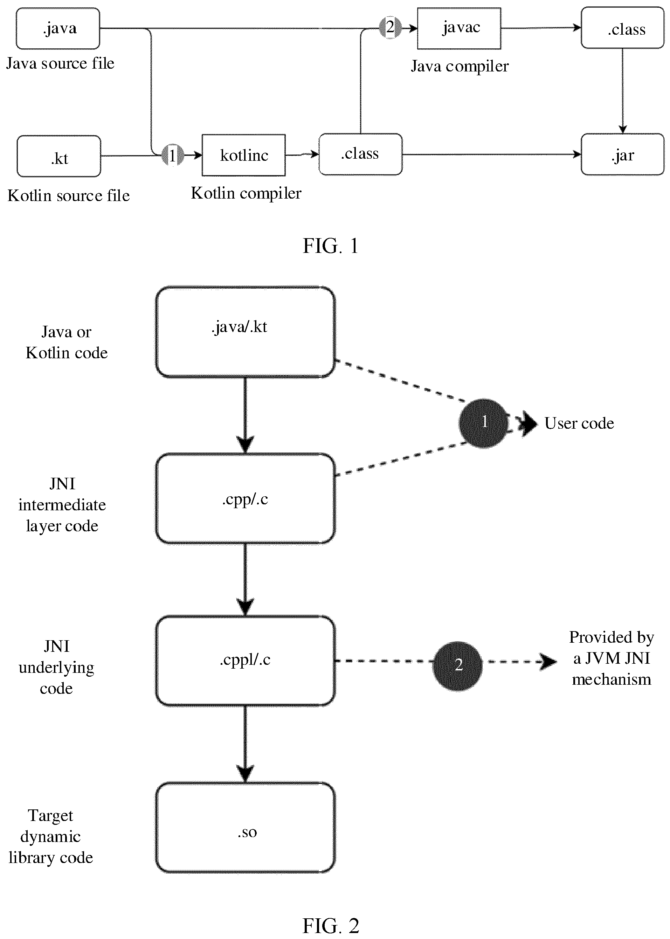

FIG. 1 shows an example of interoperation implementation between Kotlin and Java languages in the prior art.

As shown in FIG. 1, a developer performs programming by using the Kotlin language, to obtain a Kotlin source file (.kt). A Java method, for example, a class or an interface of the Java language, is invoked in the programming process. In this case, during compilation of the Kotlin source file, the following steps are performed in sequence.

Step 1: A Kotlin compiler (kotlinc) parses a Java source file (java) and a Kotlin source file separately, and determines a Java method invoked in the Kotlin source file. Then the Kotlin compiler compiles the Kotlin source file to obtain a bytecode file (.class).

Step 2: A Java compiler (Javac) compiles the bytecode file and the Java source file that are generated by the Kotlin compiler, to obtain a bytecode file (.class).

Step 3: The bytecode file generated by the Kotlin compiler and the bytecode file generated by the Java compiler are packaged together, so that a Java file package (jar) is obtained, and a Java virtual machine JVM runs the Java file package. In this case, interoperation can be implemented between the Kotlin language and the Java language.

It can be learned from the related description of FIG. 1 that the interoperation between the Kotlin language and the Java language is mainly implemented by the Kotlin compiler by directly parsing the Java source file, so that the Kotlin compiler can determine the Java method invoked in the Kotlin source file and obtain the corresponding bytecode file through processing. This process is a new mechanism introduced by the Kotlin compiler for the interoperation between the Kotlin language and the Java language. The mechanism can only be used to implement the interoperation between the Kotlin language and the Java language, and cannot be reused to implement interoperation between the Kotlin language and another language.

FIG. 2 shows an example of interoperation implementation between Kotlin and C languages in the prior art.

The interoperation between the Kotlin language and the C language can be implemented through a Java native interface JNI. The Java native interface is a standard Java virtual machine interface. The Java native interface may be used to create, check, and update a Java object, invoke a Java method, and the like. The Java native interface is used as a bridge to connect a Java virtual machine to the C/C++ language, so that a plurality of languages supported by the Java virtual machine are interoperable with the C/C++ language. As shown in FIG. 2, to enable the Kotlin language to operate the C language, a developer needs to encapsulate, in Java native interface JNI intermediate layer code (.c or .cpp) based on an application programming interface (application programming interface, API) provided by the Java native interface JNI, a method that needs to be operated by using the Java native interface, so that the encapsulated C/C++ language method can be invoked when Kotlin code is executed. To enable the C language to operate the Kotlin language, a corresponding capability of an application programming interface API needs to be encapsulated in underlying code of the Java native interface JNI, for example, to reduce impact of an invoking step required for interoperation implementation on garbage collection, so that a Kotlin language method or a Java method can be invoked by using the application programming interface API when C language code is executed. In this way, the Kotlin language and the C language have interoperability.

Completing code compilation and obtaining a Kotlin source file that invokes the Java method may be a first step of work of the developer to implement interoperation between the Kotlin language and the C language. To complete compilation of the Kotlin source file, the developer further needs to perform the following operations by using a development environment.

Second step: Compile the Kotlin source file to obtain a bytecode file. Third step: Generate a header file of the C language based on the bytecode file. Fourth step: Compile related code of the Java native interface based on the header file of the C language. Fifth step: Link to a library file based on the code obtained in the fourth step, to obtain an executable file.

It can be learned that a process of using a JNI mechanism for interoperation between the Kotlin language and the C language is complex and requires a plurality of steps. Other existing interoperability mechanisms between the Kotlin language and the C language, such as a Java native access (Java Native Access, JNA) framework, can simplify steps of using the JNI mechanism, but at a cost of interoperation performance degradation.

With reference to FIG. 1 and FIG. 2, it can be learned that, by using the language interoperation method proposed in the prior art, if one language needs to be interoperable with a plurality of other languages, a corresponding interoperability mechanism needs to be designed for each of the plurality of languages. Therefore, an implementation cost for extending interoperability of a language by adding an interoperable object is excessively high, and practicability is poor. Moreover, a developer who designs the interoperability mechanism needs to master every programming language in the interoperability mechanism, and a requirement on a personal capability of the developer is high. When the developerperforms programming to make one language interoperable with other languages, a large quantity of steps are required, and developer experience is reduced. In addition, after completing code compilation, the developer needs to implement the code by using a compiler. For the compiler, implementation costs of the language interoperation method are high, and maintenance of the language interoperation method is complex.

The following describes another language interoperation method provided in the prior art.

A principle of another language interoperation method proposed in the prior art is that a general purpose virtual machine is provided to run various language code, and language interoperability may be provided between any code combinations of all code that can be run. The following uses a GraalVM multi-language virtual machine as an example to describe a mechanism for implementing multi-language interoperation.

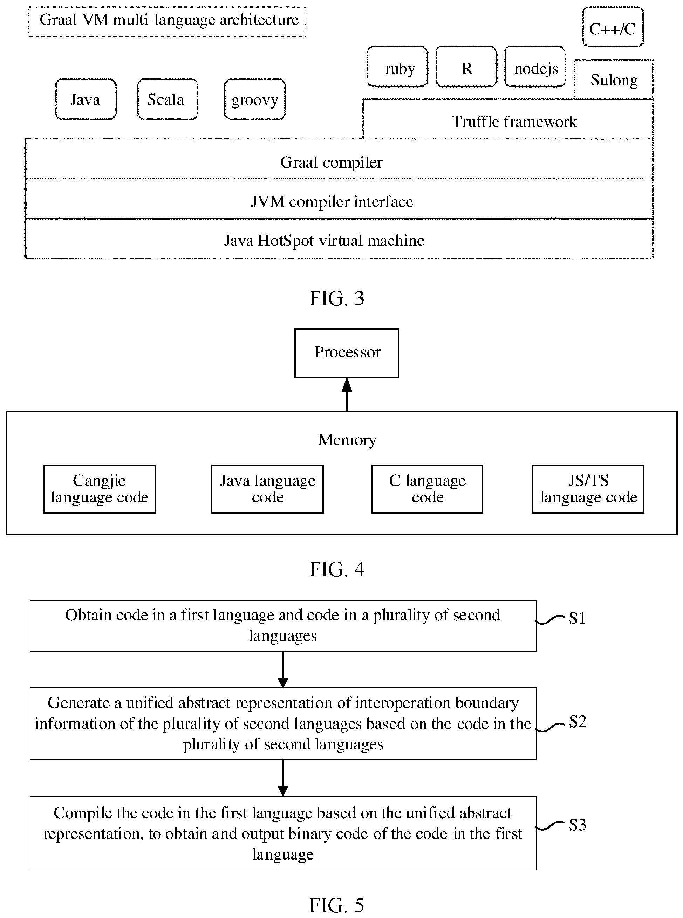

FIG. 3 is a schematic diagram of a GraalVM multi-language virtual machine architecture in the prior art.

A GraalVM is a multi-language virtual machine enhanced based on a Java HotSpot virtual machine. The GraalVM may be used as a running platform for a plurality of programming languages. As shown in FIG. 3, the plurality of programming languages include languages that are based on a Java virtual machine, such as Java, Scala, and Groovy, and further include languages that are based on a low level virtual machine (low level virtual machine, LLVM), such as C and C++, and also support other languages such as JavaScript, Ruby, and R. On the GraalVM, these programming languages may be mixed for use, different languages are supported in using interfaces and objects of each other, and these languages are supported in using compiled native library files.

A Java HotSpot virtual machine sends a compilation request to a Graal compiler through a JVM compiler interface (JVM compiler interface, JVMCI). Through the JVM compiler interface, the Graal compiler responds to the compilation request sent by the Java HotSpot virtual machine. During compilation, intermediate code of an advanced operation (for example, loading Java fields) is converted into intermediate code of an underlying operation (for example, reading data at an address plus an offset). The intermediate code of the underlying operation is finally translated into machine code.

A bottom layer of the GraalVM is the Java HotSpot virtual machine. Therefore, languages based on the Java virtual machine, such as Java, Scala, and Groovy languages, can directly run on the Java HotSpot virtual machine. Non-JVM languages, such as C, C++, JavaScript, Ruby, and R languages, can run on the Java HotSpot virtual machine by using a Truffle framework. As an important part of the GraalVM multi-language interoperability mechanism, the Truffle framework is a Java-based language implementation framework. Truffle-based language implementation requires that Java should be used to implement lexical analysis and syntax analysis of the language and that an abstract syntax tree (abstract syntax tree, AST) interpretershould be generated based on the syntax analysis. The Truffle-based language implementation and the Truffle framework are both implemented in Java. Therefore, the Truffle-based language implementation and the Truffle framework can run on any Java virtual machine JVM. For programming languages such as JavaScript, Ruby, and R languages, the Truffle framework may be used to obtain a corresponding interpreter. For languages such as C and C++, the Truffle framework may be used to obtain a high-performance LLVM bytecode interpreter called Sulong. The Java HotSpot virtual machine invokes an interface provided by the Graal compiler to actively trigger instant compilation of a non-JVM language, and converts interpretation and execution of an abstract syntax tree into machine code after instant compilation.

The multi-language interoperability mechanism implemented by using the general purpose virtual machine still has the following disadvantages: 1. Any language requiring interoperation needs to use the Truffle framework to completely recompile lexical parsing, syntax parsing, and an AST interpreter of the language. In most interoperation scenarios, it is necessary to focus only on invocation conventions and names of functions invoked during the interoperation, and there is no need to interpret and execute an entire target language for interoperation. Therefore, time and processing costs for implementing the multi-language interoperability mechanism by using the general purpose virtual machine are high. 2. In a language evolution process of a language requiring interoperation, evolution of functions such as a syntax feature causes great impact on and a great change to interoperation implementation of the language. Even a syntax change of a symbol may affect work of the interoperability mechanism. Therefore, maintainability is poor. This further increases maintenance costs and operational difficulty in interoperation implementation.

In view of this, embodiments of this application provide a language interoperation method and apparatus, a storage medium, and a program product. According to a language interoperation method provided in an embodiment of this application, language interoperability is provided for the programming languages while reducing costs and operational difficulty in language interoperation implementation, and improving scalability of language interoperability of programming languages.

FIG. 4 shows an example application scenario of a language interoperation method according to an embodiment of this application.

As shown in FIG. 4, the application scenario may be, for example, a software development scenario for a Harmony system. A plurality of programming languages, for example, a Cangjie language, a Java language, a C language, and a JS/TS language, may be used in software development. For example, code in the plurality of programming languages may be stored in a memory. The language interoperation method in this embodiment of this application may be performed by a processor, to provide interoperability for a programming language stored in the memory.

Before the language interoperation method in this embodiment of this application is performed, a host language and a target language in the current application scenario may be first determined. For example, with reference to the current application scenario and a plurality of types of programming languages (such as Cangjie, Java, C, and JS/TS) corresponding to the code stored in the memory, a programming language most applicable to the current application scenario may be first selected as a first language (host language). For example, the Cangjie language is selected. Based on a requirement of the application scenario, some or all of the programming languages corresponding to the code stored in the memory except the first language may be selected as a plurality of second languages (target languages). For example, the Java language, the C language, and the JS/TS language are selected.

After determining the first language and the plurality of second languages, the processor may obtain code in the first language (a source file, a bytecode file, or the like of the first language) and code in the plurality of second languages (source files or bytecode files, or the like of the plurality of second languages) from the memory, and perform the language interoperation method in this embodiment of this application. When the language interoperation method in this embodiment of this application is performed, a unified abstract representation of interoperation boundary information of the plurality of second languages is generated based on the code in the plurality of second languages. The unified abstract representation is binary code of the interoperation boundary information of the plurality of second languages. The interoperation boundary information of the plurality of second languages may include constituent elements allowing mutual access or use with the first language among constituent elements of the plurality of second languages, for example, invocation conventions, and names of functions and/or classes allowing mutual access or use with the first language, in the plurality of the second languages. The code in the first language is compiled based on the unified abstract representation, so that binary code of the code in the first language, for example, bytecode, may be obtained. When a virtual machine runs the binary code of the code in the first language that is obtained based on the language interoperation method in this embodiment of this application and binary code of code in second languages that is obtained based on the prior art, the first language may be interoperable with a plurality of second languages.

The following describes a language interoperation method in an embodiment of this application. FIG. 5 is an example schematic diagram of a language interoperation method according to an embodiment of this application.

As shown in FIG. 5, the language interoperation method according to this embodiment of this application includes steps S1 to S3.

S1. Obtain code in a first language and code in a plurality of second languages.

S2. Generate a unified abstract representation of interoperation boundary information of the plurality of second languages based on the code in the plurality of second languages, where the unified abstract representation is binary code of the interoperation boundary information of the plurality of second languages, and the interoperation boundary information of the plurality of second languages represents constituent elements allowing mutual access or use with the first language among constituent elements of the plurality of second languages.

S3. Compile the code in the first language based on the unified abstract representation, to obtain and output binary code of the code in the first language, where when the binary code of the code in the first language is executed, a constituent element in the code in the first language and a constituent element of any one of the plurality of second languages are mutually accessible or usable.

The mutual access or use between the constituent element in the code in the first language and the constituent element of any one of the plurality of second languages may be mutual access or use between a class in the code in the first language and a class of any one of the plurality of second languages, mutual access or use between an interface in the code in the first language and an interface in code in any one of the plurality of second languages, or the like.

According to the language interoperation method in this embodiment of this application, the code in the plurality of second languages is obtained; the unified abstract representation of the interoperation boundary information of the plurality of second languages may be generated based on the code in the plurality of second languages, where the unified abstract representation is the binary code of the interoperation boundary information of the plurality of second languages, so that the unified abstract representation can reflect the constituent elements allowing mutual access or use with the first language among the constituent elements of the plurality of second languages; and the code in the first language may be compiled based on the unified abstract representation, so that the binary code of the code in the first language is obtained. When the binary code of the code in the first language is executed, the constituent element in the code in the first language and constituent elements in the code in the plurality of second languages are mutually accessible or usable, that is, the first language has interoperability with the plurality of second languages. The unified abstract representation may be obtained by using the interoperation boundary information of the plurality of second languages and does not relate to an internal method of a constituent element, and there is no need to parse all syntax of the plurality of second languages, so that the language interoperation method in this embodiment of this application has low development costs. An update of an internal method of a constituent element of the plurality of languages does not affect the interoperation boundary information of the plurality of second languages and therefore does not affect the unified abstract representation, and there is no need to maintain the unified abstract representation, so that the language interoperation method in this embodiment of this application has low maintenance costs. An increase of the second languages may cause an increase of constituent elements of the plurality of second languages, but does not affect original constituent elements and does not affect original content of the unified abstract representation, so that interoperability of the first language and the plurality of second languages can be further expanded. A developer only needs to complete compilation of the code in the first language and start the language interoperation method, so that workload of the developer is reduced and that operational difficulty of the language interoperation method is reduced. In conclusion, according to the language interoperation method in this embodiment of this application, language interoperability is provided for the programming languages while reducing costs and operational difficulty in language interoperation implementation, and improving scalability of language interoperability of programming languages.

With reference to the application scenario in FIG. 4, in step S1, the first language may be a Cangjie language, the plurality of second languages may be, for example, a C language, a Java language, and a JS/TS language, and the code in the plurality of second languages may be, for example, C language code, Java language code, and JS/TS language code, where the C language code may be a file with a suffix of .c or a file with a suffix of .h, the Java language code may be a file with a suffix of .java or a file with a suffix of .class, and the JS/TS language code may be a file with a suffix of .js or a file with a suffix of .ts.d.

A person skilled in the art should understand that the first language may vary in different application scenarios. For example, in an Android software development application scenario, the first language may be the Java language, and in a browser development scenario, the first language may be the JS language. Correspondingly, the plurality of second languages may also vary in different application scenarios. Specific types of the first language and the plurality of second languages are not limited in this embodiment of this application.

For example explanations and descriptions of the interoperation boundary information and the unified abstract representation, refer to related descriptions of the application scenario in FIG. 4.

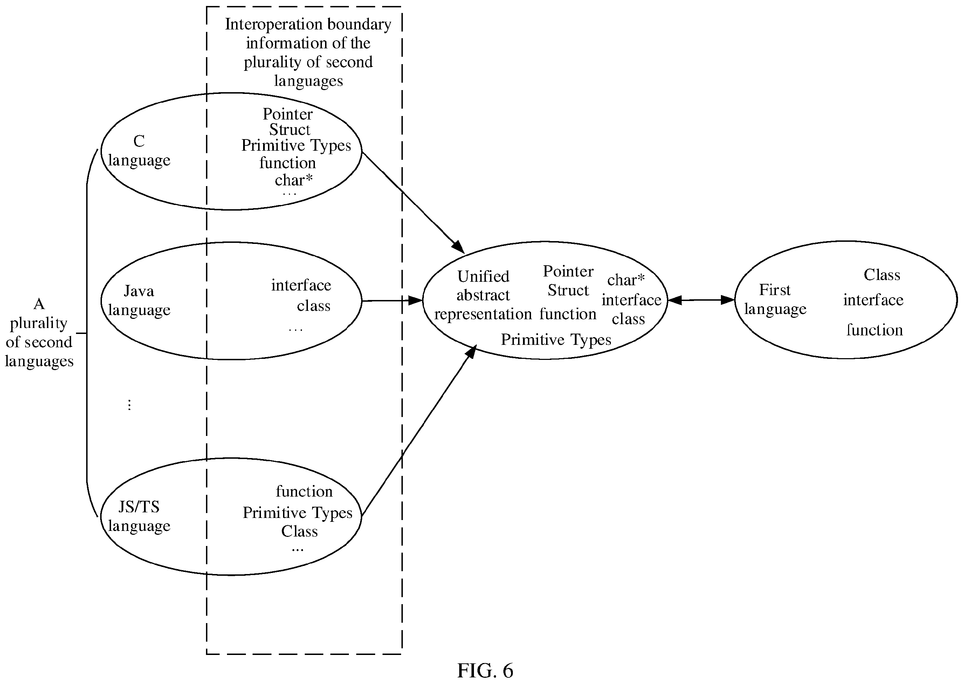

The following describes an example implementationof step S2 in this embodiment of this application. FIG. 6 shows an example of generation of a unified abstract representation of interoperation boundary information of a plurality of second languages according to an embodiment of this application.

In a possible implementation, the generating a unified abstract representation of interoperation boundary information of the plurality of second languages based on the code in the plurality of second languages in step S2 includes:
recognizing the interoperation boundary information of the plurality of second languages based on the code in the plurality of second languages; and
generating the unified abstract representation based on the interoperation boundary information of the plurality of second languages.

In this way, the unified abstract representation can be directly obtained by processing the interoperation boundary information. Because analysis of massive syntax of the plurality of second languages is avoided, efficiency of the language interoperation method according to this embodiment of this application can be improved.

For example, as shown in FIG. 6, interoperation boundary information of the C language, recognized based on the C language code may include a plurality of constituent elements such as function, char*, Struct, pointer, and primitive type interoperation boundary information of the Java language, recognized based on the Java language code may include a plurality of constituent elements such as interface and class; and interoperation boundary information of the JS/TS language, recognized based on the JS/TS language code may include a plurality of constituent elements such as function, primitive types, and class. It can be learned that, because constituent elements of different second languages are not completely the same, interoperation boundary information of the different second languages is not completely the same. In this case, the interoperation boundary information of the plurality of second languages may include the interoperation boundary information of the C language, the interoperation boundary information of the Java language, and the interoperation boundary information of the JS/TS language. In this way, the interoperation boundary information of the plurality of second languages may include at least one unique constituent element. Therefore, a special part of the interoperation boundary information of the plurality of second languages can be obtained, and further, the interoperation boundary information of the plurality of second languages can be obtained.

A person skilled in the art should understand that the interoperation boundary information of the plurality of second languages may further include more content related to the constituent elements of the plurality of second languages, so long as necessary information (for example, names of functions and/or classes and invocation conventions) of the constituent elements is included, and internal information (for example, internal information of a function and internal execution information of a method of a class) of the constituent elements is not included. Specific components of the interoperation boundary information are not limited in this application.

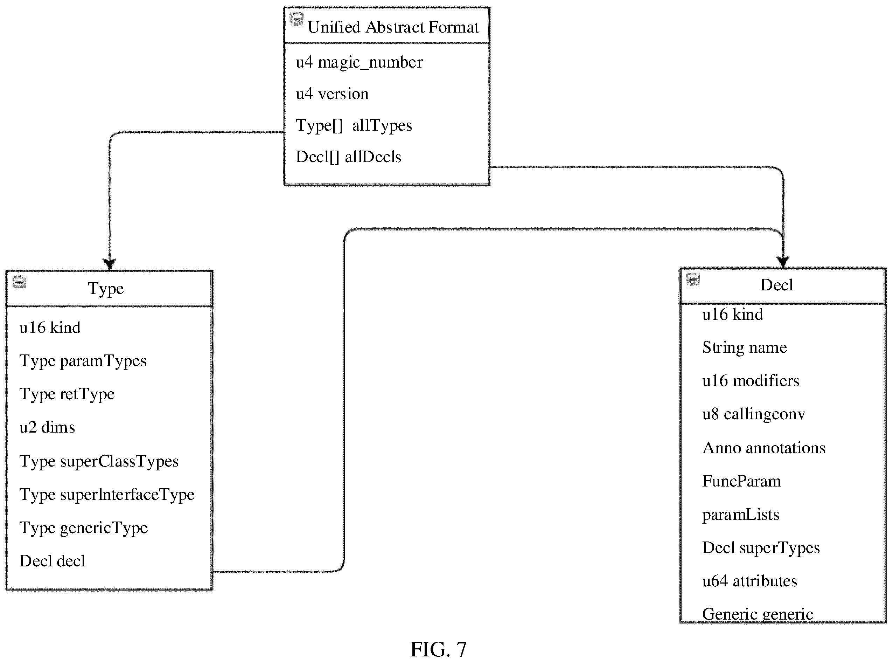

With reference to FIG. 6 and FIG. 7, the following describes an example method for generating a unified abstract representation based on interoperation boundary information of a plurality of second languages in an embodiment of this application.

In a possible implementation, the interoperation boundary information of the plurality of second languages includes at least one repeated constituent element and at least one unique constituent element, the at least one repeated constituent element is a constituent element that repeatedly appears among the constituent elements included in the interoperation boundary information of the plurality of second languages, and the at least one unique constituent element is a constituent element that appears only once among the constituent elements included in the interoperation boundary information of the plurality of second languages.

In this way, a quantity of the constituent elements in the interoperation boundary information can be reduced, so that memory space occupied by the unified abstract representation of the interoperation boundary information is also reduced and that complexity of a subsequent operation of compiling the code in the first language based on the unified abstract representation is reduced.

In a possible implementation, the generating the unified abstract representation based on the interoperation boundary information of the plurality of second languages includes:
generating the unified abstract representation based on a common part and a special part of the interoperation boundary information of the plurality of second languages, where the common part is obtained by using each of the at least one repeated constituent element as one constituent element, and the special part includes the at least one unique constituent element.

For example, refer to the related description of FIG. 6. Interoperation boundary information of each second language may include a plurality of constituent elements, and the constituent elements included in the interoperation boundary information of the plurality of second languages may include a constituent element that repeatedly appears and a constituent element that appears only once. In this case, the interoperation boundary information of the plurality of second languages may include at least one repeated constituent element and at least one unique constituent element. For example, in the example in FIG. 6, repeated constituent elements may include a primitive types data format (C language), a primitive types data format (JS/TS language), a function (C language), a function (JS/TS language), a class (Java language), and a class (JS/TS language), and unique constituent elements may include a char* data format (C language), a Struct class (C language), a pointer (C language), and an interface (Java language). In this case, the at least one repeated constituent element included in the interoperation boundary information of the plurality of second languages may be at least one of the primitive types data format, the function function, orthe class class, and the at least one unique constituent element may be at least one of the char* data format, the Struct class, the pointer pointer, and the interface interface.

In a possible implementation, the interoperation boundary information of the plurality of second languages includes a common part and a special part, where each constituent element in the common part corresponds to at least two of the plurality of second languages; and each constituent element in the special part corresponds to one of the plurality of second languages.

For example, for the interoperation boundary information of the plurality of second languages, a common part may be found. The common part may be identical constituent elements included in interoperation boundary information of at least two of the plurality of second languages, and may be obtained by using, for example, each of the at least one repeated constituent element as one constituent element, that is, each constituent element in the common part corresponds to the at least two of the plurality of second languages. For example, in the example in FIG. 6, the at least one repeated constituent element may include the primitive types data format (C language), the primitive types data format (JS/TS language), the function function (C language), the function function (JS/TS language), the class class (Java language), and the class class (JS/TS language). In this case, the constituent elements included in the common part may include the primitive types data format, the function function, and the class class, where the primitive types data format and the function function may correspond to two second languages: the C language and the JS/TS language; and the class class may correspond to two second languages: the Java language and the JS/TS language.

For the interoperation boundary information of the plurality of second languages, a special part may be found. The special part may include, for example, at least one unique constituent element, that is, each constituent element in the special part corresponds to one of the plurality of second languages. For example, in the example in FIG. 6, the at least one unique constituent element may include the char* data format (C language), the Struct class (C language), the pointer pointer (C language), and the interface interface (Java language). In this case, the constituent elements included in the special part may include the char* data format, the Struct class, the pointer pointer, and the interface interface. Each of the char* data format, the Struct class, and the pointer pointer may correspond to one second language, that is, the C language. The interface interface may correspond to one second language, that is, the Java language.

In this way, each constituent element in the common part can correspond to at least two of the plurality of second languages, and each constituent element in the special part can correspond to only one of the plurality of second languages. Therefore, the common part and the special part can accurately represent features of the plurality of second languages.

The unified abstract representation may be obtained by combining the common part and the special part that are obtained above. For example, in the example in FIG. 6, the unified abstract representation may include the primitive types data format, the function function, the class class, the char* data format, the Struct class, the pointer pointer, and the interface interface. The unified abstract representation may be stored in a binary format, and may be stored by using a structure of the struct class. For example, in the unified abstract representation obtained by using the C language, the Java language, and the JS/TS language as second languages, the constituent elements may include the class, the interface, the function, a variable, a parameter, a field, and the like, and corresponding data types may include i8, i16, i32, i64, u8, u16, u32, u64, f16, f32, f64, char, bool, function, array, class, interface, generics, and the like. FIG. 7 shows an example of a binary format of a unified abstract representation according to an embodiment of this application. A Decl part may be filled in with related information of a constituent element, and a Type part may be filled in with related information of the data type.

A person skilled in the art should understand that the interoperation boundary information that can be used to generate the unified abstract representation should not be limited to the interoperation boundary information of the foregoing three second languages. When there are more second languages, interoperation boundary information of more second languages may be included. For a manner of generating a unified abstract representation of the interoperation boundary information of more second languages, refer to the example of generating the unified abstract representation based on the interoperation boundary information of the C language, the Java language, and the JS/TS language in the foregoing example. Therefore, the language interoperation method according to this embodiment of this application has good scalability and low development costs. In addition, because the unified abstract representation is obtained by processing only the interoperation boundary information of the plurality of second languages, evolution of a function such as a syntax feature other than the interoperation boundary information of the plurality of second languages does not affect the unified abstract representation, and maintenance costs can be reduced.

The following describes an example implementation method of step S3 in this embodiment of this application.

In a possible implementation, the compiling the code in the first language based on the unified abstract representation, to obtain and output binary code of the code in the first language in step S3 includes:
obtaining, based on a difference between the unified abstract representation and interoperation boundary information of the first language, a processing means for processing semantics of the unified abstract representation and the first language, where the interoperation boundary information of the first language is determined based on the code in the first language; and
compiling the code in the first language by using the processing means, to obtain and output the binary code of the code in the first language.

The semantics of the first language describe behavior such as a logical operation and data reading and writing performed by a computer when the computer executes a program compiled in the first language. The processing means for processing the semantics of the unified abstract representation and the first language may be a means for fusing the semantics of the unified abstract representation and the first language. According to the invention, a constituent element of the unified abstract representation and a constituent element of the first language are "fused" into one constituent element whose name is constituent element memory. According to the invention, a tag is added to the constituent element of the first language, to indicate that a parameter in the constituent element is implemented in an implementation of the constituent element of the unified abstract representation, so that semantics of the constituent element of the unified abstract representation are "fused" into the first language.

In this way, when the code in the first language is compiled, processing of the semantics of the unified abstract representation and the first language can be completed, so that the code in the first language that accesses or uses the constituent element of the second language is successfully compiled. Under a prerequisite that the processing means is preset, the developer does not need to make an indication during compilation. Therefore, work difficulty of the developer can be further reduced. When the processing means is determined by the developer in real time, flexibility of processing the semantics of the unified abstract representation and the first language during compilation of the code in the first language can be improved.

The interoperation boundary information of the first language may be determined based on the code in the first language, and may include the constituent element in the code in the first language. In the example in FIG. 6, the interoperation boundary information of the first language may include the class class, the interface interface, and the function function.

When the difference between the unified abstract representation and interoperation boundary information of the first language varies, the processing means may also vary. The following separately describes different processing means and example implementations of the processing means.

In a possible implementation, the processing means includes mapping processing, where the mapping processing is: compiling, based on a data type of corresponding memory in a mapping relationship, a constituent element that is in the code in the first language and that uses same memory as a constituent element of the unified abstract representation but has a different name, where the mapping relationship indicates a correspondence between the constituent element of the unified abstract representation, a constituent element of the interoperation boundary information of the first language, and data types of different memory.

For example, when the constituent element in the code in the first language and the constituent element of the unified abstract representation only have different names, and have no difference in occupied memory space, the processing means including mapping processing may be selected. During compilation of the code in the first language, the mapping processing can map the constituent element of the first language based on the preset mapping relationship to the data type of the corresponding memory for compilation. Assuming that the second language includes the C language, an example of the mapping relationship is shown in Table 1.

**Table 1**

| Constituent element in the code in the first language | Constituent element in the unified abstract representation | Mapped data type |
|---|---|---|
| Unit | Void | u1 |
| Int8 | int8_t | i8 |
| Uint8 | nint8_t | u8 |
| Int16 | int16_t | i16 |
| UInt16 | uint16_t | u16 |
| Int32 | int32_t | i32 |
| Uint32 | uint32_t | u32 |
| Int64 | int64_t | i64 |
| UInt64 | uint64_t | u64 |
| Float16 | / | f16 |
| Float32 | Float | f32 |
| Float64 | Double | f64 |

Refer to Table 1. The mapping relationship indicates a correspondence between the constituent element of the unified abstract representation, the constituent element (for example, the constituent element in the code in the first language) of the interoperation boundary information of the first language, and data types of different memory. The mapped data type may reflect memory space occupied by the constituent element.

For the constituent element in the code in the first language, during compilation, only memory required by the constituent element may be concerned, and the name of the constituent element is not concerned. Therefore, statistics of constituent elements that are in the code in the first language and that use same memory as constituent elements of the unified abstract representation but have different names may be collected in advance, and a mapping relationship between the constituent elements and different memory is determined based on the memory of the collected constituent elements that use the same memory but have different names. Therefore, during compilation of the code in the first language, the memory of the constituent element can be directly determined based on the mapping relationship, and semantic processing is implemented for the constituent element that is in the code in the first language and that uses the same memory as the constituent element of the unified abstract representation but has a different name.

When the plurality of second languages include the Java language, an instance variable (variable for short hereinafter) of any constituent element of the Java language may be a null pointer with a null value (null), indicating that the object does not exist. In this case, when the null pointer directly accesses a member of the null pointer or invokes an attribute and a method of a member of the null pointer, a null pointer exception (null pointer exception, NPE) is thrown during the runtime. It is assumed that the first language has high security when no variable of the first language is allowed to be a null value. During interoperation between the first language and the Java language, a variable of the Java language that is invoked by the first language is transferred to the first language. If the variable is exactly a null value, the variable with the null value is transferred to the runtime of the first language, that is, a null pointer exception occurs during the runtime of the first language, and security of the first language is damaged.

To protect security of the first language, during compilation of the code in the first language, optionally, the runtime conversion code may be used. The runtime conversion code may be used to check whether the runtime is null. A plurality of processing means may all use the runtime conversion code, but use of the runtime conversion code in different processing means may be different. Attributes of the plurality of second languages and the first language may be first determined, and a processing means to be used is determined based on different situations of the attributes of the plurality of second languages and the first language and a specific requirement of an application scenario.

In a possible implementation, a constituent element variable of the unified abstract representation includes a null pointer, a constituent element variable of the first language does not include a null pointer, and the processing means includes first runtime conversion processing, where the first runtime conversion processing is: when determining, by using runtime conversion code, that the runtime is null, throwing a currently compiled constituent element variable as an exception value.

A constituent element variable is an instance variable of a constituent element. During compilation, whether the runtime is null is associated with whether the currently compiled constituent element variable is a null pointer. Therefore, by using the runtime conversion code to determine that the runtime is null, it can be indirectly determined that the currently compiled constituent element variable is a null pointer, so that security of the first language after the variable is transferred into the code in the first language is determined before the variable is transferred into the code in the first language. When it is determined that the runtime is null, the currently compiled constituent element variable is thrown as an exception value, so that the exception is not transferred to the first language. In this way, security of the first language can be ensured.

For example, when it is determined that the plurality of second languages have a nullable attribute and that the first language does not have a nullable attribute, that is, when the constituent element variable of the unified abstract representation includes a null pointer, and the constituent element variable of the first language does not include a null pointer, it is considered that at least one of the plurality of second languages has low security and that the first language has high security. If the requirement of the application scenario is to ensure security of the first language, a processing means including first runtime conversion processing may be selected. When variables of the plurality of second languages are assigned to variables of the first language during compilation of the code in the first language, the first runtime conversion processing uses the runtime conversion code to check whether the runtime is null. If the runtime is null, the null pointer exception NPE can be directly thrown, that is, the currently compiled constituent element variable is thrown as an exception value. In this case, the null pointer exception is still thrown, but the null pointer exception occurs only in the interoperation boundary information part of the first language, and is not further propagated into the first language. Therefore, security of the first language can be ensured.

In a possible implementation, a constituent element variable of the unified abstract representation includes a null pointer, a constituent element variable of the first language does not include a null pointer, and the processing means includes second runtime conversion processing, where the second runtime conversion processing is: when determining, by using runtime conversion code, that the runtime is null, returning a null value in an optional constituent element.

During compilation, whether the runtime is null is associated with whether the currently compiled constituent element variable is a null pointer. Therefore, by using the runtime conversion code to determine that the runtime is null, it can be indirectly determined that the currently compiled constituent element variable is a null pointer, so that security of the first language after the variable is transferred into the code in the first language is determined before the variable is transferred into the code in the first language. When it is determined that the runtime is null, the null value in the optional constituent element is returned, so that no exception occurs during compilation of the code in the first language. In this way, security of the first language can be ensured.

For example, when it is determined that the plurality of second languages have a nullable attribute and that the first language does not have a nullable attribute, that is, when the constituent element variable of the unified abstract representation includes a null pointer, and the constituent element variable of the first language does not include a null pointer, it is considered that at least one of the plurality of second languages has low security and that the first language has high security. If the requirement of the application scenario is to ensure security of the first language, a processing means including second runtime conversion processing may be selected. When variables of the plurality of second languages are assigned to variables of the first language during compilation of the code in the first language, the second runtime conversion processing uses the runtime conversion code to check whether the runtime is null. If the runtime is null, the null value (null in the optional constituent element may be returned. If the runtime is not null, a specific value in the optional constituent element may be returned. In this case, no null pointer exception is thrown. Therefore, security of the first language can be ensured.

In a possible implementation, in addition to an application scenario in which security of the first language needs to be ensured when the first language has high security, there may be an application scenario in which security of the first language does not need to be ensured. For example, when it is determined that the plurality of second languages have a nullable attribute and that the first language does not have a nullable attribute, that is, when the constituent element variable of the unified abstract representation includes a null pointer, and the constituent element variable of the first language does not include a null pointer, it is considered that at least one of the plurality of second languages has low security and that the first language has high security. If the requirement of the application scenario is that security of the first language does not need to be ensured, optionally, the runtime conversion code may not be used during compilation of the code in the first language. In this case, interoperability between the first language and the plurality of second languages can be ensured to a maximum extent.

In a possible implementation, apart from the foregoing case in which the first language has security, the first language may not have security. For example, when it is determined that the first language has a nullable attribute, that is, when the constituent element variable of the first language includes a null pointer, the first language itself does not have high security. Therefore, regardless of whether the plurality of second languages have a nullable attribute, that is, whether the constituent element variable of the unified abstract representation includes a null pointer, security of the first language is not further damaged. In this case, optionally, the runtime conversion code may not be used during compilation of the code in the first language.

A person skilled in the art should understand that a manner of determining the processing means of the first runtime conversion processing and the processing means of the second runtime conversion processing may be fixed or preset, or may be determined by the developer in real time. This is not limited in this application.

In a possible implementation, the compiling the code in the first language based on the unified abstract representation, to obtain and output binary code of the code in the first language includes: when constituent elements with a same name but different syntax exist in the unified abstract representation and interoperation boundary information of the first language, adding, to a constituent element of the first language, a tag corresponding to a constituent element of the unified abstract representation, to obtain and output the binary code of the code in the first language, where the tag indicates that when the tagged constituent element in the code in the first language is executed, syntax of the constituent element of the unified abstract representation is implemented.

In this way, syntax that should be used for a currently compiled constituent element can be indicated during compilation, to avoid inability to make a selection when constituent elements with a same name correspond to multiple syntaxes of the first language and the second language. Therefore, interoperability supported by the language interoperation method in this embodiment of this application can be improved.

For example, when the constituent element of the first language and the constituent element of the unified abstract representation have a same name but differ greatly in some features, for example, when syntax requirements of an implementation mechanism are different, that is, when there are constituent elements with the same name but different syntax in the unified abstract representation and the interoperation boundary information of the first language, syntax difference tag processing may be performed during compilation to obtain and output the binary code. Due to the syntax difference tag processing, during compilation of the code in the first language, the constituent element can be compiled based on syntax of a second language corresponding to the tag of the constituent element. In other words, when the tagged constituent element is executed, the syntax of the constituent element of the unified abstract representation is implemented. For example, the second language is the Java language, and generic erasure is used to implement generics in the Java language; however, when instantiation is used to implement generics in the first language, a great conflict occurs in semantic processing between the second language and the first language. Generic constituent elements in the unified abstract representation may be tagged (tags are stored in attributes attributes). If a generic class, an interface, or the like of the Java language is expected to be invoked in the first language, an explicit tag syntax (for example, an annotation or a macro) may be added to the first language, that is, a tag corresponding to the constituent element of the unified abstract representation is added to the constituent element of the first language, to distinguish whether the generic class belongs to the first language or the second language. For example, @java is used to tag a generic constituent element, indicating that generic erasure is used to implement generics in the constituent element.

The following describes a syntax difference tag by using an example with reference to an example of the code in the first language.

```
         // Example of the code in the first language
         package example
         import java.GenericClassExample
         @java
         class B <: GenericClassExample {
         override public foo<T>(t:T) {
         // do something
         }
         }
         func main(){
         var p = B()
         p.foo(p)
         }
```

For example, in the foregoing code in the first language, a class B of a constituent element of the first language is tagged by using @java. The class B inherits a generic type from Java, and a foo generic function is recompiled. In this case, a generic parameter T may be processed by using generic erasure of the Java language, and may be tagged by using @java to distinguish processing of the generic function of the first language, that is, a tag (for example, @java) corresponding to a constituent element of the unified abstract representation is added to the constituent element of the first language. When the tagged constituent element is executed, syntax (such as generic erasure) of the constituent element of the unified abstract representation is implemented.

The syntax difference tag may be used to distinguish a great difference in various semantics, and generics of the first language and the second languages including the Java language are used as an example herein. A person skilled in the art should understand that the syntax difference tag is also applicable to constituent elements of the first language and other second languages, for example, the C language and the JS/TS language.

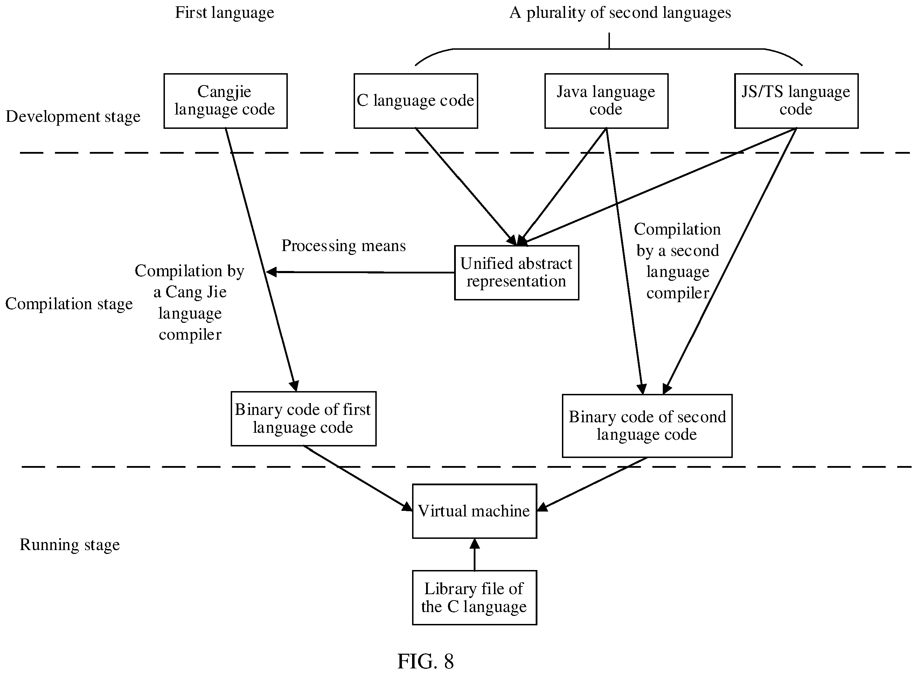

Binary code such as bytecode of the code in the first language that is obtained through compilation of the code in the first language may be obtained based on the foregoing plurality of processing means. The binary code of the code in the first language and binary code of the code in the second languages that is obtained through compilation of the code in the plurality of second languages may be input together into a virtual machine for running, so that interoperation between the first language and the plurality of second languages can be implemented. FIG. 8 shows an example of obtaining binary code of code in a first language and running the binary code of the code in the first language according to an embodiment of this application. If the second languages include basic languages such as the C language, when the languages run on the virtual machine, library files corresponding to the languages may be directly obtained.

According to the language interoperation method in this embodiment of this application, as shown in Table 2, the first language may generally have basic language interoperability at an implementation cost of 3 per person-year. In comparison with the prior art in which an average implementation cost is 40+ per person-year, the language interoperation method in this embodiment of this application has low costs and low workload. Because the unified abstract representation is used to represent the interoperation boundary information of the plurality of second languages, maintenance costs are greatly reduced. A feature change of a second language has little impact on the unified abstract representation. Stability of the solution can also be improved by focusing only on the interoperation boundary information. The language interoperation method can still be used when interoperability with a new second language is added for the first language. The interoperation boundary information can be expanded at any time as the capability of the first language is expanded. The unified abstract representation needs to be expanded only based on a feature level. For example, adding an array interoperation function of the C language does not affect other existing interoperation functions. Steps used by a user are reduced to two steps: compiling the code in the first language and making an indication during compilation. In addition, the processing means used for compiling the code in the first language is simple and clear. This brings better experience to the user.

**Table 2**

| | Method in this application | Prior art |
|---|---|---|
| Implementation cost | 8 per person-year | 40+ per person-year |
| Maintainability | High | Low |
| Scalability | High | Low |
| User experience | Excellent | Poor |

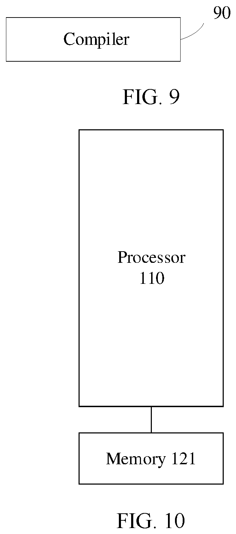

FIG. 9 is an example schematic diagram of a structure of a language interoperation apparatus according to an embodiment of this application.

As shown in FIG. 9, in a possible implementation, an embodiment of this application provides a language interoperation apparatus. The apparatus includes a compiler 90, configured to: obtain code in a first language and code in a plurality of second languages; generate a unified abstract representation of interoperation boundary information of the plurality of second languages based on the code in the plurality of second languages, where the unified abstract representation is binary code of the interoperation boundary information of the plurality of second languages, and the interoperation boundary information of the plurality of second languages represents constituent elements allowing mutual access or use with the first language among constituent elements of the plurality of second languages; and compile the code in the first language based on the unified abstract representation, to obtain and output binary code of the code in the first language, where when the binary code of the code in the first language is executed, a constituent element in the code in the first language and a constituent element of any one of the plurality of second languages are mutually accessible or usable.

In a possible implementation, the generating a unified abstract representation of interoperation boundary information of the plurality of second languages based on the code in the plurality of second languages includes: recognizing the interoperation boundary information of the plurality of second languages based on the code in the plurality of second languages; and generating the unified abstract representation based on the interoperation boundary information of the plurality of second languages.

In a possible implementation, the interoperation boundary information of the plurality of second languages includes at least one repeated constituent element and at least one unique constituent element, the at least one repeated constituent element is a constituent element that repeatedly appears among the constituent elements included in the interoperation boundary information of the plurality of second languages, and the at least one unique constituent element is a constituent element that appears only once among the constituent elements included in the interoperation boundary information of the plurality of second languages.

In a possible implementation, the interoperation boundary information of the plurality of second languages includes a common part and a special part, where each constituent element in the common part corresponds to at least two of the plurality of second languages; and each constituent element in the special part corresponds to only one of the plurality of second languages.

In a possible implementation, the compiling the code in the first language based on the unified abstract representation, to obtain and output binary code of the code in the first language includes: obtaining, based on a difference between the unified abstract representation and interoperation boundary information of the first language, a processing means for processing semantics of the unified abstract representation and the first language, where the interoperation boundary information of the first language is determined based on the code in the first language; and compiling the code in the first language by using the processing means, to obtain and output the binary code of the code in the first language.

In a possible implementation, the processing means includes mapping processing, where the mapping processing is: compiling, based on a data type of corresponding memory in a mapping relationship, a constituent element that is in the code in the first language and that uses same memory as a constituent element of the unified abstract representation but has a different name, where the mapping relationship indicates a correspondence between the constituent element of the unified abstract representation, a constituent element of the interoperation boundary information of the first language, and data types of different memory.

In a possible implementation, a constituent element variable of the unified abstract representation includes a null pointer, a constituent element variable of the first language does not include a null pointer, and the processing means includes first runtime conversion processing, where the first runtime conversion processing is: when determining, by using runtime conversion code, that the runtime is null, throwing a currently compiled constituent element variable as an exception value.

In a possible implementation, a constituent element variable of the unified abstract representation includes a null pointer, a constituent element variable of the first language does not include a null pointer, and the processing means includes second runtime conversion processing, where the second runtime conversion processing is: when determining, by using runtime conversion code, that the runtime is null, returning a null value in an optional constituent element.

In a possible implementation, the compiling the code in the first language based on the unified abstract representation, to obtain and output binary code of the code in the first language includes: when constituent elements with a same name but different syntax exist in the unified abstract representation and interoperation boundary information of the first language, adding, to a constituent element of the first language, a tag corresponding to a constituent element of the unified abstract representation, to obtain and output the binary code of the code in the first language, where the tag indicates that when the tagged constituent element in the code in the first language is executed, syntax of the constituent element of the unified abstract representation is implemented.

In a possible implementation, interoperation boundary information of different second languages is not completely the same.

An embodiment of this application provides a language interoperation apparatus, including a processor, and a memory configured to store instructions executable by the processor. The processor is configured to implement the foregoing method when executing the instructions.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code runs in a processor of an electronic device, the processor in the electronic device performs the foregoing method.

FIG. 10 is an example schematic diagram of a structure of a language interoperation apparatus according to an embodiment of this application.

As shown in FIG. 10, the language interoperation apparatus may include at least one of a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and a server device. A specific type of the language interoperation apparatus is not specifically limited in this embodiment of this application.

The language interoperation apparatus may include a processor 110 and a memory 121. It may be understood that the structure shown in this embodiment of this application does not constitute a specific limitation on the language interoperation apparatus. In some other embodiments of this application, the language interoperation apparatus may include more or fewer components than those shown in the figure, or some components are combined, or some components are split, or component arrangements are different. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor 110 may generate an operation control signal based on instruction operation code and a time sequence signal, to control instruction fetching and instruction execution.

A memory may be further disposed in the processor 110, and is configured to store instructions and data. In some embodiments, the memory in the processor 110 may be a cache memory. The memory may store an instruction or data that is used by the processor 110 or that is frequently used by the processor 110. If the processor 110 needs to use the instruction or data, the processor 110 may invoke the instruction or data directly from the memory. Therefore, repeated access is avoided, a waiting time of the processor 110 is reduced, and efficiency of the system is improved.

The memory 121 may be configured to store computer-executable program code, where the executable program code includes instructions. The memory 121 may include a program storage area and a data storage area. The program storage area may store an operating system, an application (for example, a processing means) required by at least one function, and the like. The data storage area may store data (for example, a unified abstract representation) and the like created in a process of using the language interoperation apparatus. In addition, the memory 121 may include a high-speed random access memory, and may further include a nonvolatile memory, for example, at least one magnetic disk storage device, a flash memory, or a universal flash storage (universal flash storage, UFS). The processor 110 performs various functional methods of the language interoperation apparatus or the foregoing language interoperation method by running the instructions stored in the memory 121 and/or the instructions stored in the memory disposed in the processor.

The computer-readable storage medium may be a tangible device that may retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage medium include a portable computer disk, a hard disk, a random access memory (Random Access Memory, RAM), a read-only memory (Read Only Memory, ROM), an electrically erasable programmable read-only memory (Electrically Programmable Read-Only-Memory, EPROM, or flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from the network, and forwards the computer-readable program instructions for storage in a computer-readable storage medium in the computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code compiled in one programming language or any combination of a plurality of programming languages. The programming languages include object-oriented programming languages such as Smalltalk and C++, and a conventional procedural programming language such as "C" or a similar programming language. The computer-readable program instructions may be executed completely on a user computer, partially on a user computer, as an independent software package, partially on a user computer and partially on a remote computer, or completely on a remote computer or server. When a remote computer is involved, the remote computer may be connected to a user computer through any type of network, including a local area network (Local Area Network, LAN) or a wide area network (Wide Area Network, WAN), or may be connected to an external computer (for example, connected through the Internet by using an Internet service provider). In some embodiments, an electronic circuit, for example, a programmable logic circuit, a field programmable gate array (Field Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to the embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general purpose computer, a dedicated computer, or another programmable data processing apparatus to produce a machine, so that the instructions, when executed by the processor of the general purpose computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or the block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse sequence, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to the embodiments, in a process of implementing the present invention that claims protection, a person skilled in the art may understand and implement another variation of the disclosed embodiments by viewing the accompanying drawings, disclosed content, and the appended claims. In the claims, the word "comprise" (comprising) does not exclude another component or step, and "a" or "one" does not exclude a case of plurality. A single processor or another unit may implement several functions listed in the claims. Some measures are described in dependent claims that are different from each other, but this does not mean that these measures cannot be combined to produce a better effect.

The embodiments of this application are described above. The foregoing descriptions are examples, are not exhaustive, and are not limited to the disclosed embodiments. Many modifications and changes are clear to a person of ordinary skill in the art without departing from the scope of the described embodiments. The selection of terms used in this specification is intended to best explain the principles of the embodiments, practical application, or improvements to technologies in the market, or to enable another person of ordinary skill in the art to understand the embodiments disclosed in this specification.

## Claims

1. A language interoperation method, wherein the method comprises:
obtaining code (S1) in a first language and code in a plurality of second languages;
generating (S2) a unified abstract representation of interoperation boundary information of the plurality of second languages based on the code in the plurality of second languages, wherein the unified abstract representation is binary code of the interoperation boundary information of the plurality of second languages, and the interoperation boundary information of the plurality of second languages represents constituent elements allowing mutual access or use with the first language among constituent elements of the plurality of second languages; and
compiling (S3) the code in the first language by fusing semantics of the unified abstract representation and the first language to obtain and output binary code of the code in the first language, wherein a constituent element of the unified abstract representation and a constituent element of the first language are fused into one constituent element whose name is constituent element memory or a tag is added to the constituent element of the first language, to indicate that a parameter in the constituent element is implemented in an implementation of the constituent element of the unified abstract representation, so that semantics of the constituent element of the unified abstract representation are fused into the first language,
wherein when the binary code of the code in the first language is executed, a constituent element in the code in the first language and a constituent element of any one of the plurality of second languages are mutually accessible or usable.

2. The method according to claim 1, wherein the generating a unified abstract representation of interoperation boundary information of the plurality of second languages based on the code in the plurality of second languages comprises:
recognizing the interoperation boundary information of the plurality of second languages based on the code in the plurality of second languages; and
generating the unified abstract representation based on the interoperation boundary information of the plurality of second languages.

3. The method according to claim 1 or 2, wherein the interoperation boundary information of the plurality of second languages comprises at least one repeated constituent element and at least one unique constituent element, the at least one repeated constituent element is a constituent element that repeatedly appears among the constituent elements comprised in the interoperation boundary information of the plurality of second languages, and the at least one unique constituent element is a constituent element that appears only once among the constituent elements comprised in the interoperation boundary information of the plurality of second languages.

4. The method according to claim 1 or 2, wherein the interoperation boundary information of the plurality of second languages comprises a common part and a special part, wherein
each constituent element in the common part corresponds to at least two of the plurality of second languages; and
each constituent element in the special part corresponds to only one of the plurality of second languages.

5. The method according to claim 1, wherein
the processing means comprises mapping processing, wherein the mapping processing is:
compiling, based on a data type of corresponding memory in a mapping relationship, a constituent element that is in the code in the first language and that uses same memory as a constituent element of the unified abstract representation but has a different name, wherein the mapping relationship indicates a correspondence between the constituent element of the unified abstract representation, a constituent element of the interoperation boundary information of the first language, and data types of different memory.

6. The method according to claim 1 or 5, wherein
a constituent element variable of the unified abstract representation comprises a null pointer, a constituent element variable of the first language does not comprise a null pointer, and the processing means comprises first runtime conversion processing, wherein
the first runtime conversion processing is:
when determining, by using runtime conversion code, that the runtime is null, throwing a currently compiled constituent element variable as an exception.

7. The method according to any one of claims 1 to 5, wherein
a constituent element variable of the unified abstract representation comprises a null pointer, a constituent element variable of the first language does not comprise a null pointer, and the processing means comprises second runtime conversion processing, wherein
the second runtime conversion processing is:
when determining, by using runtime conversion code, that the runtime is null, returning a null value in an optional constituent element.

8. The method according to any one of claims 1 to 3, wherein the compiling the code in the first language based on the unified abstract representation, to obtain and output binary code of the code in the first language comprises:
when constituent elements with a same name but different syntax exist in the unified abstract representation and interoperation boundary information of the first language, adding, to a constituent element of the first language, a tagged constituent element corresponding to a constituent element of the unified abstract representation, to obtain and output the binary code of the code in the first language, wherein
the tag indicates that when the tagged constituent element in the code in the first language is executed, syntax of the constituent element of the unified abstract representation is implemented.

9. The method according to claim 1, wherein
interoperation boundary information of different second languages is not completely the same.

10. A language interoperation apparatus, comprising:
a processor (110); and
a memory (121) configured to store instructions executable by the processor (110), wherein
when the processor (110) is configured to execute the instructions, the method according to any one of claims 1 to 9 is implemented.

11. A non-volatile computer-readable storage medium, wherein the non-volatile computer-readable storage medium stores computer program instructions, and when the computer program instructions are executed by a processor, the method according to any one of claims 1 to 9 is implemented.

12. A computer program product, comprising computer-readable code or a non-volatile computer-readable storage medium carrying computer-readable code, wherein when the computer-readable code runs in an electronic device, a processor in the electronic device performs the method according to any one of claims 1 to 9.

## Patentansprüche

1. Sprachinteroperationsverfahren, wobei das Verfahren umfasst:
Erhalten eines Codes (S1) in einer ersten Sprache und eines Codes in einer Vielzahl von zweiten Sprachen;
Erzeugen (S2) einer vereinheitlichten abstrakten Repräsentation von Informationen über Interoperationsgrenzen der Vielzahl von zweiten Sprachen basierend auf dem Code in der Vielzahl von zweiten Sprachen, wobei die vereinheitlichte abstrakte Repräsentation ein Binärcode der Informationen über die Interoperationsgrenzen der Vielzahl von zweiten Sprachen ist, und wobei die Informationen über die Interoperationsgrenzen der Vielzahl von zweiten Sprachen Bestandselemente repräsentieren, die einen wechselseitigen Zugriff oder eine wechselseitige Nutzung mit der ersten Sprache in den Bestandselementen aus der Vielzahl von zweiten Sprachen erlauben; und
Kompilieren (S3) des Codes in der ersten Sprache, indem die Semantiken der vereinheitlichten abstrakten Repräsentation und der ersten Sprache fusioniert werden, um einen Binärcode des Codes in der ersten Sprache zu erhalten und auszugeben, wobei ein Bestandselement der vereinheitlichten abstrakten Repräsentation und ein Bestandselement der ersten Sprache in ein Bestandselement fusioniert werden, dessen Name Bestandselementspeicher ist, oder wobei ein Tag zu dem Bestandselement der ersten Sprache hinzugefügt wird, um anzuzeigen, dass ein Parameter in einer Implementierung des Bestandselements der vereinheitlichten abstrakten Repräsentation in dem Bestandselement implementiert wird, sodass die Semantiken des Bestandselements der vereinheitlichten abstrakten Repräsentation in die erste Sprache fusioniert werden,
wobei, wenn der Binärcode des Codes in der ersten Sprache ausgeführt wird, ein Bestandselement in dem Code in der ersten Sprache und ein Bestandselement von einem aus der Vielzahl von zweiten Sprachen wechselseitig zugänglich oder nutzbar sind.

2. Verfahren nach Anspruch 1, wobei das Erzeugen einer vereinheitlichten abstrakten Repräsentation von Informationen über die Interoperationsgrenzen der Vielzahl von zweiten Sprachen basierend auf dem Code in der Vielzahl von zweiten Sprachen umfasst:
Erkennen der Informationen über die Interoperationsgrenzen der Vielzahl von zweiten Sprachen basierend auf dem Code in der Vielzahl von zweiten Sprachen; und
Erzeugen der vereinheitlichten abstrakten Repräsentation basierend auf den Informationen über die Interoperationsgrenzen der Vielzahl von zweiten Sprachen.

3. Verfahren nach Anspruch 1 oder 2, wobei die Informationen über die Interoperationsgrenzen der Vielzahl von zweiten Sprachen mindestens ein wiederholtes Bestandselement und mindestens ein einzigartiges Bestandselement umfasst, wobei das mindestens eine wiederholte Bestandselement ein Bestandselement ist, das wiederholt in den Bestandselementen erscheint, die in den Informationen über die Interoperationsgrenzen der Vielzahl von zweiten Sprachen enthalten sind, und wobei das mindestens eine einzigartige Bestandselement ein Bestandselement ist, das nur einmal in den Bestandselementen erscheint, die in den Informationen über die Interoperationsgrenzen der Vielzahl von zweiten Sprachen enthalten sind.

4. Verfahren nach Anspruch 1 oder 2, wobei die Informationen über die Interoperationsgrenzen der Vielzahl von zweiten Sprachen einen gemeinsamen Anteil und einen speziellen Anteil umfassen, wobei
jedes Bestandselement in dem gemeinsamen Anteil mindestens zwei aus der Vielzahl von zweiten Sprachen entspricht; und
jedes Bestandselement in dem speziellen Anteil nur einer aus der Vielzahl von zweiten Sprachen entspricht.

5. Verfahren nach Anspruch 1, wobei
das Verarbeitungselement eine Zuordnungsverarbeitung umfasst, wobei die Zuordnungsverarbeitung aufweist:
Kompilieren, basierend auf einem Datentyp eines entsprechenden Speichers in einer Zuordnungsbeziehung, eines Bestandselements, das sich in dem Code in der ersten Sprache befindet und das den gleichen Speicher wie ein Bestandselement der vereinheitlichten abstrakten Repräsentation verwendet, aber einen anderen Namen aufweist, wobei die Zuordnungsbeziehung eine Entsprechung zwischen dem Bestandselement der vereinheitlichten abstrakten Repräsentation und einem Bestandselement der Informationen über die Interoperationsgrenzen der ersten Sprache und Datentypen von verschiedenen Speichern anzeigt.

6. Verfahren nach Anspruch 1 oder 5, wobei
eine Bestandselementvariable der vereinheitlichten abstrakten Repräsentation einen Nullzeiger umfasst, eine Bestandselementvariable der ersten Sprache keinen Nullzeiger umfasst, und das Verarbeitungselement eine erste Laufzeitumwandlungsverarbeitung umfasst, wobei
die erste Laufzeitumwandlungsverarbeitung aufweist:
wenn ermittelt wird, indem ein Laufzeitumwandlungscode verwendet wird, dass die Laufzeit Null ist, Auswerfen einer aktuell kompilierten Bestandselementvariablen als eine Ausnahme.

7. Verfahren nach einem der Ansprüche 1 bis 5, wobei
eine Bestandselementvariable der vereinheitlichten abstrakten Repräsentation einen Nullzeiger umfasst, eine Bestandselementvariable der ersten Sprache keinen Nullzeiger umfasst, und das Verarbeitungselement eine zweite Laufzeitumwandlungsverarbeitung umfasst, wobei
die zweite Laufzeitumwandlungsverarbeitung aufweist:
wenn ermittelt wird, indem ein Laufzeitumwandlungscode verwendet wird, dass die Laufzeit Null ist, Zurückgeben eines Nullwerts in einem optionalen Bestandselement.

8. Verfahren nach einem der Ansprüche 1 bis 3, wobei das Kompilieren des Codes in der ersten Sprache basierend auf der vereinheitlichten abstrakten Repräsentation, um einen Binärcode des Codes in der ersten Sprache zu erhalten und auszugeben, umfasst:
wenn in der vereinheitlichten abstrakten Repräsentation und den Informationen über die Interoperationsgrenzen der ersten Sprache Bestandselemente mit einem gleichen Namen aber einer unterschiedlichen Syntax vorhanden sind, Hinzufügen eines getaggten Bestandselements, das einem Bestandselement der vereinheitlichten abstrakten Repräsentation entspricht, zu einem Bestandselement der ersten Sprache, um den Binärcode des Codes in der ersten Sprache zu erhalten und auszugeben, wobei
das Tag anzeigt, dass, wenn das getaggte Bestandselement in dem Code in der ersten Sprache ausgeführt wird, die Syntax des Bestandselements der vereinheitlichten abstrakten Repräsentation implementiert wird.

9. Verfahren nach Anspruch 1, wobei
die Informationen über die Interoperationsgrenzen von verschiedenen zweiten Sprachen nicht vollständig gleich sind.

10. Sprachinteroperationsvorrichtung, umfassend:
einen Prozessor (110); und
einen Speicher (121), der konfiguriert ist zum Speichern von Anweisungen, die durch den Prozessor (110) ausführbar sind, wobei,
wenn der Prozessor (110) konfiguriert ist zum Ausführen der Anweisungen, das Verfahren nach einem der Ansprüche 1 bis 9 implementiert wird.

11. Nicht-flüchtiges computerlesbares Speichermedium, wobei in dem nicht-flüchtigen computerlesbaren Speichermedium Computerprogrammanweisungen gespeichert sind und wobei, wenn die Computerprogrammanweisungen von einem Prozessor ausgeführt werden, das Verfahren nach einem der Ansprüche 1 bis 9 implementiert wird.

12. Computerprogrammprodukt, das einen computerlesbaren Code umfasst, oder nicht-flüchtiges computerlesbares Speichermedium, das einen computerlesbaren Code mitführt, wobei, wenn der computerlesbare Code in einer elektronischen Vorrichtung ausgeführt wird, ein Prozessor in der elektronischen Vorrichtung das Verfahren nach einem der Ansprüche 1 bis 9 durchführt.

## Revendications

1. Procédé d'interfonctionnement de langage, dans lequel le procédé comprend :
l'obtention d'un code (S1) dans un premier langage et d'un code dans une pluralité de seconds langages ;
la génération (S2) d'une représentation abstraite unifiée d'informations de limite d'interfonctionnement de la pluralité de seconds langages sur la base du code dans la pluralité de seconds langages, dans lequel la représentation abstraite unifiée est un code binaire des informations de limite d'interfonctionnement de la pluralité de seconds langages, et les informations de limite d'interfonctionnement de la pluralité de seconds langages représentent des éléments constitutifs permettant un accès mutuel au premier langage, ou une utilisation de celui-ci, parmi les éléments constitutifs de la pluralité de seconds langages ; et
la compilation (S3) du code dans le premier langage par fusion des sémantiques de la représentation abstraite unifiée et du premier langage pour obtenir et émettre un code binaire du code dans le premier langage, dans lequel un élément constitutif de la représentation abstraite unifiée et un élément constitutif du premier langage sont fusionnés en un élément constitutif dont le nom est une mémoire d'éléments constitutifs ou une étiquette est ajoutée à l'élément constitutif du premier langage, pour indiquer qu'un paramètre dans l'élément constitutif est implémenté dans une implémentation de l'élément constitutif de la représentation abstraite unifiée, de sorte que les sémantiques de l'élément constitutif de la représentation abstraite unifiée sont fusionnées dans le premier langage,
dans lequel lorsque le code binaire du code dans le premier langage est exécuté, un élément constitutif dans le code dans le premier langage et un élément constitutif de l'un quelconque de la pluralité de seconds langages sont mutuellement accessibles ou utilisables.

2. Procédé selon la revendication 1, dans lequel la génération d'une représentation abstraite unifiée des informations de limite d'interfonctionnement de la pluralité de seconds langages sur la base du code dans la pluralité de seconds langages comprend :
la reconnaissance des informations de limite d'interfonctionnement de la pluralité de seconds langages sur la base du code dans la pluralité de seconds langages ; et
la génération de la représentation abstraite unifiée sur la base des informations de limite d'interfonctionnement de la pluralité de seconds langages.

3. Procédé selon la revendication 1 ou 2, dans lequel les informations de limite d'interfonctionnement de la pluralité de seconds langages comprennent au moins un élément constitutif répété et au moins un élément constitutif unique, l'au moins un élément constitutif répété est un élément constitutif qui apparaît de façon répétée parmi les éléments constitutifs compris dans les informations de limite d'interfonctionnement de la pluralité de seconds langages, et l'au moins un élément constitutif unique est un élément constitutif qui apparaît seulement une fois parmi les éléments constitutifs compris dans les informations de limite d'interfonctionnement de la pluralité de seconds langages.

4. Procédé selon la revendication 1 ou 2, dans lequel les informations de limite d'interfonctionnement de la pluralité de seconds langages comprennent une partie commune et une partie spéciale, dans lequel
chaque élément constitutif dans la partie commune correspond à au moins deux de la pluralité de seconds langages ; et
chaque élément constitutif dans la partie spéciale correspond à seulement un de la pluralité de seconds langages.

5. Procédé selon la revendication 1, dans lequel
le moyen de traitement comprend un traitement de mappage, dans lequel le traitement de mappage est :
la compilation, sur la base d'un type de données de mémoire correspondante dans une relation de mappage, d'un élément constitutif qui est dans le code dans le premier langage et qui utilise la même mémoire qu'un élément constitutif de la représentation abstraite unifiée mais qui a un nom différent, dans lequel la relation de mappage indique une correspondance entre l'élément constitutif de la représentation abstraite unifiée, un élément constitutif des informations de limite d'interfonctionnement du premier langage et des types de données d'une mémoire différente.

6. Procédé selon la revendication 1 ou 5, dans lequel
une variable d'élément constitutif de la représentation abstraite unifiée comprend un pointeur nul, une variable d'élément constitutif du premier langage ne comprend pas de pointeur nul et le moyen de traitement comprend un premier traitement de conversion d'exécution, dans lequel
le premier traitement de conversion d'exécution est :
lors de la détermination, en utilisant un code de conversion d'exécution, que l'exécution est nulle, lancer une variable d'élément constitutif actuellement compilée comme une exception.

7. Procédé selon l'une quelconque des revendications 1 à 5, dans lequel
une variable d'élément constitutif de la représentation abstraite unifiée comprend un pointeur nul, une variable d'élément constitutif du premier langage ne comprend pas de pointeur nul et le moyen de traitement comprend un second traitement de conversion d'exécution, dans lequel
le second traitement de conversion d'exécution est :
lors de la détermination, en utilisant un code de conversion d'exécution, que l'exécution est nulle, retourner une valeur nulle dans un élément constitutif optionnel.

8. Procédé selon l'une quelconque des revendications 1 à 3, dans lequel la compilation du code dans le premier langage sur la base de la représentation abstraite unifiée, pour obtenir et émettre un code binaire du code dans le premier langage comprend :
lorsque des éléments constitutifs ayant un même nom mais une syntaxe différente existent dans la représentation abstraite unifiée et des informations de limite d'interfonctionnement du premier langage, ajouter, à un élément constitutif du premier langage, un élément constitutif étiqueté correspondant à un élément constitutif de la représentation abstraite unifiée, pour obtenir et émettre le code binaire du code dans le premier langage, dans lequel
l'étiquette indique que lorsque l'élément constitutif étiqueté dans le code dans le premier langage est exécuté, une syntaxe de l'élément constitutif de la représentation abstraite unifiée est implémentée.

9. Procédé selon la revendication 1, dans lequel
des informations de limite d'interfonctionnement de seconds langages différents ne sont pas complètement les mêmes.

10. Appareil d'interfonctionnement de langage, comprenant :
un processeur (110) ; et
une mémoire (121) configurée pour stocker des instructions exécutables par le processeur (110), dans lequel
lorsque le processeur (110) est configuré pour exécuter les instructions, le procédé selon l'une quelconque des revendications 1 à 9 est implémenté.

11. Support de stockage lisible par ordinateur non volatile, dans lequel le support de stockage lisible par ordinateur non volatile stocke des instructions de programme d'ordinateur, et lorsque les instructions de programme d'ordinateur sont exécutées par un processeur, le procédé selon l'une quelconque des revendications 1 à 9 est implémenté.

12. Produit de programme d'ordinateur, comprenant un code lisible par ordinateur ou un support de stockage lisible par ordinateur non volatile acheminant un code lisible par ordinateur, dans lequel lorsque le code lisible par ordinateur s'exécute dans un dispositif électronique, un processeur dans le dispositif électronique met en œuvre le procédé selon l'une quelconque des revendications 1 à 9.
